# EUROPÄISCHE PATENTSCHRIFT

(11) **EP 0 468 085 B1**
(45) Veröffentlichungstag und Bekanntmachung des Hinweises auf die Patenterteilung: **30.11.1994**
(21) Anmeldenummer: 90117830.1
(22) Anmeldetag: 17.09.1990
(51) Int. Cl.: F16H 7/08

(54) **Kettenspanner für eine Brennkraftmaschine**
Chain tensioner for internal combustion engine
Tendeur de chaîne pour moteur à combustion interne

(30) Priorität: 26.07.1990 DE 4023728
(43) Veröffentlichungstag der Anmeldung: 29.01.1992
(73) Patentinhaber: Dr.Ing.h.c. F. Porsche Aktiengesellschaft, 70435 Stuttgart (DE); HYDRAULIK-RING ANTRIEBS- UND STEUERUNGSTECHNIK GmbH, D-72622 Nürtingen (DE)
(72) Erfinder: Trzmiel, Alfred, Dipl.-Ing.(FH), D-7441 Grafenberg (DE); Kröner, Matthias, Dipl.-Ing.(FH), W-7303 Neuhausen (DE); Weyandt, Johannes, D-7132 Illingen (DE)

(56) Entgegenhaltungen:
- WO-A-83/00731
- DE-A- 3 145 115
- DE-A- 3 318 093
- DE-A- 3 832 512
- FR-A- 2 350 518

## Beschreibung

Die Erfindung betrifft einen Kettenspanner für eine Brennkraftmaschine nach dem Oberbegriff des Anspruchs 1. Ein derartiger Kettenspanner ist aus beispielsweise DE-OS 3 421 028 bekannt.

Bei einem ähnlichen, in DE-PS 31 45 115 beschriebenen Kettenspanner, wird in einer Gehäusebohrung eines Hydraulikgehäuses ein Hohlkolben längsgeführt. Oben auf den Hydraulikkolben ist ein Spannschuh aufgesetzt. Wird der Hohlkolben an seiner Unterseite mit Hydraulikdruck beaufschlagt, so wird mit dem Spannschuh die Kette verspannt. Die Hydraulikflüssigkeit wird über ein Kugelrückschlagventil in den Hohlkolben eingebracht. Bei Belastung des Hydraulikkolbens durch Kettenschläge wirkt der Hydraulikkolben wie ein Starrkörper, da die Hydraulikflüssigkeit nahezu inkompressibel ist und das Rückschlagventil am Entweichen verhindert ist. Ein zu hoher Überdruck wird verhindert durch Öffnen eines Überdruckventils. Zusätzlich zur Druckbeaufschlagung wirkt auf den Hydraulikkolben an seiner Unterseite eine Schraubenfeder.

Es ist die Aufgabe der Erfindung, einen Kettenspanner so zu gestalten, daß der Hydraulikkolben bei Stoßbelastung eine größere Nachgiebigkeit aufweist und ein Schwingen und Schlagen der Kette wirksamer unterbindet.

Zur Lösung dieser Aufgabe dienen die kennzeichnenden Merkmale des Anspruchs 1. Da der Hydraulikkolben durch eine Druckfeder mechanisch verspannt ist und die auf ihn wirkende Hydraulikflüssigkeit bei stoßweiser Kettenbelastung entweichen kann, wird eine ausgezeichnete federnd gedämpfte Kettenspannung verwirklicht. Ein weiterer Vorteil dieser Bauweise ist die höhere Funktionssicherheit. Hydraulische Kettenspanner herkömmlicher Bauweise sind während des Anlassens nicht voll funktionsfähig, wenn der Hydraulikdruck nach längerem Stillstand der Brennkraftmaschine abgesunken ist, und sich nach dem Anlassen erst wieder aufbauen muß. Da der erfindungsgemäße Kettenspanner mechanisch gespannt ist, ist er auch während des Anlassens voll wirksam.

Weitere konstruktive Besonderheiten über die Gestaltung und Bemessung des Kettenspanners enthalten die Unteransprüche.

Ein Ausführungsbeispiel der Erfindung ist in der Zeichnung dargestellt und wird nachfolgend erläutert.

Es zeigen:

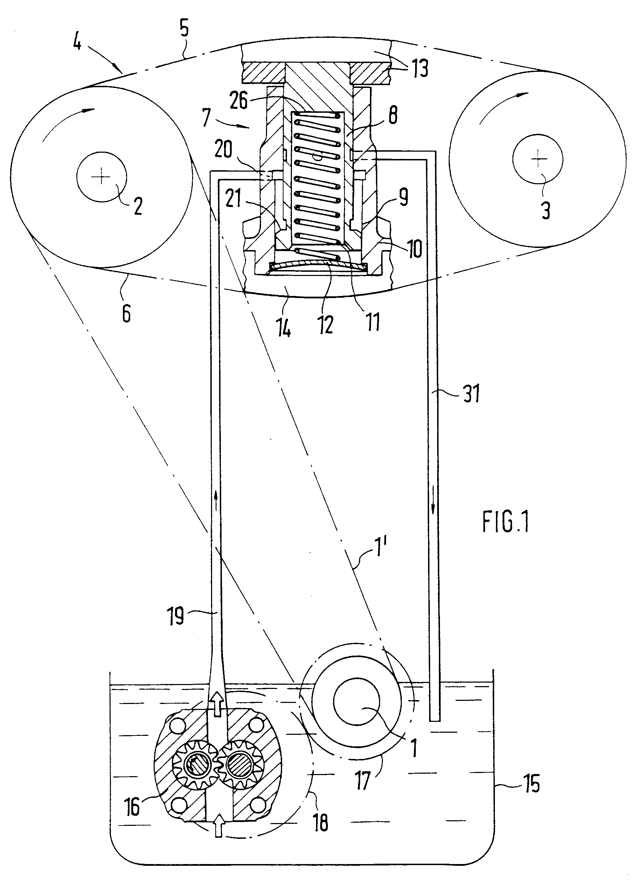

- Fig. 1: Nockenwellenantrieb mit Kettenspanner,

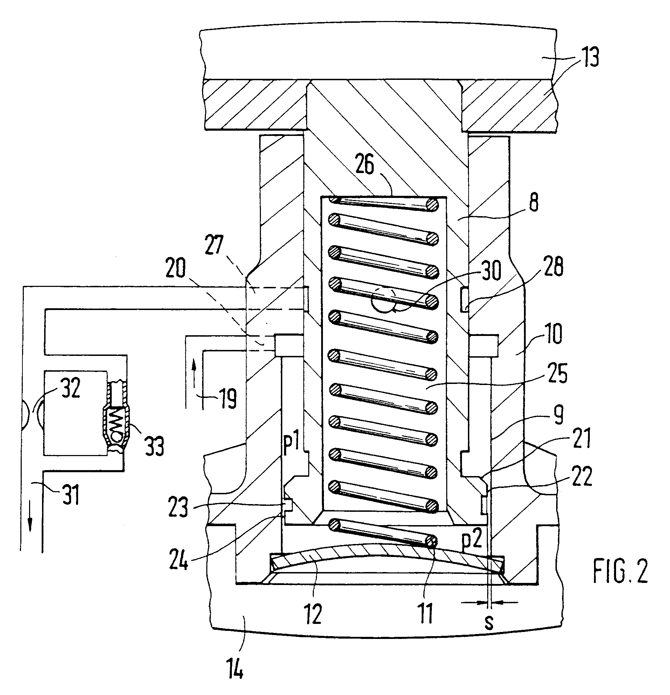

- Fig. 2: Längsschnitt des Kettenspanners,

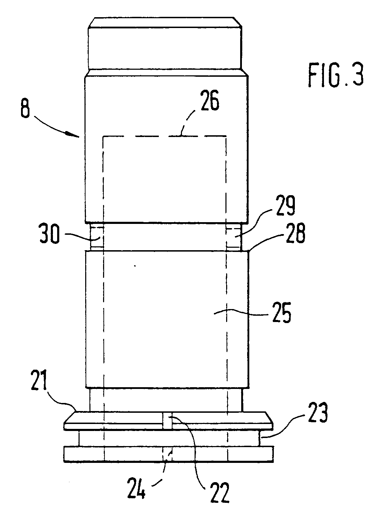

- Fig. 3: Seitenansicht auf den Hydraulikkolben des Kettenspanners.

Von einer Kurbelwelle 1 einer Brennkraftmaschine ist mit einem Zahnriemen 1' oder einer Kette eine die Auslaßventile betätigende Auslaßnockenwelle 2 angetrieben. Die Auslaßnockenwelle 2 treibt mit einer Kette 4 eine die Einlaßventile steuernde Einlaßnockenwelle 3 an. Am Lasttrum 5 und Lostrum 6 der Kette 4 greift von der Ketteninnenseite her ein hydraulisch gedämpfter Kettenspanner 7 an.

Der Kettenspanner 7 besteht aus einem hohlen Hydraulikkolben 8, der in einer Gehäusebohrung 9 eines feststehenden Gehäuses 10 längsgeführt ist und durch eine zentrische Schraubenfeder 11 gegenüber dem Gehäuse 10 verspannt ist. Der Kolben 8 ist mit einer äußeren Ringfläche 21 versehen. Die Schraubenfeder 11 stützt sich hierbei an einer im Gehäuse 10 befestigten Scheibe 12 ab. Stirnseitig ist auf den Hydraulikkolben ein Spannschuh 13 aufgesteckt, der die Schraubenfeder 11 an das Lasttrum 5 der Kette 4 andrückt und sie unter Spannung hält. Am Lostrum 6 der Kette 4 liegt ein am Gehäuse 10 befestigter Gleitschuh 14 an.

Zusätzlich wird auf den Hydraulikkolben 8 von beiden Seiten her zur Dämpfung Hydraulikdruck gegeben. Als Hydraulikflüssigkeit dient Motoröl aus einer Ölwanne 15 der Brennkraftmaschine. In der Ölwanne 15 ist eine Zahnradpumpe 16 angeordnet; sie wird von der Kurbelwelle 1 über ein Zahnradpaar 17, 18 angetrieben. Die Zahnradpumpe 16 fördert das als Hydraulikflüssigkeit verwendete Motoröl über eine Druckleitung 19 an den radialen Zuführkanal 20 des Gehäuses 10 und von dort gegen die äußere Ringfläche des Hydraulikkolbens 8. Durch eine erste Axialnut 22 gelangt das Motoröl in eine Ringnut 23 und sodann durch eine zweite Axialnut 24 zu dem zylindrischen, zentralen Hohlraum 25 des Hydraulikkolbens 8, der durch eine Innenfläche 26 begrenzt ist. Infolge Drosselung in den um 180° zueinander versetzten Axialnuten 22, 24 wird der zugeführte Hydraulikdruck p1 auf einen an der Innenfläche 26 wirksamen niedereren Druck p2 reduziert.

Nahe dem Zuführkanal 20 enthält das Gehäuse 10 einen Rücklaufanschluß 27, der über eine Ringnut 28 des Hydraulikkolbens 8 mit den zum Hohlraum 25 führenden Rücklaufbohrungen 29, 30 verbunden ist. An den Rücklaufanschluß 27 ist eine Rücklaufleitung 31 angeschlossen, in die eine Drossel 32 und im Bypaß zu ihr liegend ein Rückschlagventil 33 eingesetzt ist.

## Patentansprüche

1. Kettenspanner für eine Kette, die zwischen einer Einlaßnockenwelle und einerAuslaßnockenwelle einer Brennkraftmaschine vorgesehen ist, welcher Kettenspanner zwischen einem Lasttrum und einem Lostrum der Kette wirkt und einen in einer Gehäusebohrung (9) eines feststehenden Gehäuses (10) längsgeführten Hydraulikkolben umfaßt, welcher durch eine am Gehäuse (10) abgestützten Schraubenfeder (11) belastet ist, **dadurch gekennzeichnet**, daß das Gehäuse (10) einen Gleitschuh (14) und der Hydraulikkolben (8) einen Spannschuh (13) umfaßt, die mit dem Lostrum (6) und dem Lasttrum zusammenarbeiten und daß der Hydraulikdruck (p1) eine äußere Ringfläche (21) des Hydraulikkolbens (8) in seiner einen Bewegungsrichtung und ein reduzierter Hydraulikdruck (p2) eine zentrale Innenfläche (26) des Kolbens (8) in seiner anderen Bewegungsrichtung beaufschlagt, welche Ringfläche (21) zwischen einer Gehäusebohrung (9) und dem Hydraulikkolben (8) vorgesehen ist und über mindestens einen Drosselspalt (Nut mit Tiefe s) mit der Innenfläche (26) flüssigkeitsleitend verbunden ist.

2. Kettenspanner nach Anspruch 1, dadurch gekennzeichnet, daß der Hydraulikkolben (8) einen zylindrischen, durch die Innenfläche (26) begrenzten Hohlraum (25) aufweist, der die zwischen der Innenfläche (26) und dem Gehäuse (10) verspannte Schraubenfeder (11) enthält.

3. Kettenspanner nach Anspruch 2, dadurch gekennzeichnet, daß von der Ringfläche (21) eine erste Axialnut (22) zu einer Ringnut (23) des Hydraulikkolbens (8) führt und daß diese Ringnut (23) über eine zweite, Axialnut (24) an den Hohlraum (25) angeschlossen ist.

4. Kettenspanner nach Anspruch 3, dadurch gekennzeichnet, daß die erste Axialnut (22) zu der zweiten Axialnut (24) in Umfangsrichtung um 180° versetzt ist.

5. Kettenspanner nach einem der Ansprüche 2, 3 oder 4, dadurch gekennzeichnet, daß der Hohlraum (25) über radiale Rücklaufbohrungen (29, 30) des Hydraulikkolbens (8) und eine Ringnut (28) mit einem Rücklaufanschluß (27) in Verbindung steht, von dem eine Rücklaufleitung (31) zur Ölwanne (15) der Brennkraftmaschine führt.

6. Kettenspanner nach Anspruch 5, dadurch gekennzeichnet, daß die Rücklaufleitung (31) eine Drossel (32) und zu ihr im Bypaß liegend ein Rückschlagventil (33) enthält.

7. Kettenspanner nach Anspruch 6, dadurch gekennzeichnet, daß durch geeignete Bemessung und Anordnung der Axialnuten (22, 24), der Rücklaufbohrungen (29, 30) sowie der Drossel (32) und des Rückschlagventils (33) der Hydraulikkolben (8) bei seiner Spannbewegung in Richtung Kette (4) weniger stark gedämpft ist als in Gegenrichtung .

## Claims

1. A tensioner for a chain provided between an inlet camshaft and an outlet camshaft of an internal-combustion engine, the chain tensioner acting between a loaded run and a slack run of the chain and comprising an hydraulic piston which is guided longitudinally in a bore (9) of a stationary housing (10) and which is loaded by a helical spring (11) supported on the housing (10), **characterized in that** the housing (10) comprises a sliding shoe (14) and the hydraulic piston (8) a clamping shoe (13), cooperating with the slack run (6) and the loaded run, and the hydraulic pressure (**p1**) acts upon an outer annular surface (21) of the hydraulic piston (8) in one direction of movement thereof and a reduced hydraulic pressure (**p2**) acts upon a central inner surface (26) of the piston (8) in the other direction of movement thereof the annular surface (21) being provided between a housing bore (9) and the hydraulic piston (8) and being connected to the inner surface (26) by way of at least one throttle gap (groove of depth **s**) so as to convey liquid.

2. A chain tensioner according to Claim 1, **characterized in that** the hydraulic piston (8) has a cylindrical cavity (25) bounded by the inner surface (26) and containing the helical spring (11) clamped between the inner surface (26) and the housing (10).

3. A chain tensioner according to Claim 2, **characterized in that** a first axial groove (22) leads from the annular surface (21) to an annular groove (23) of the hydraulic piston (8), and the said annular groove (23) is connected to the cavity (25) by way of a second axial groove (24).

4. A chain tensioner according to Claim 3, **characterized in that** the first axial groove (22) is offset circumpherentially by 180° with respect to the second axial groove (24).

5. A chain tensioner according to one of Claims 2, 3 or 4, **characterized in that** the cavity (25) is connected by way of radial return bores (29, 30) of the hydraulic piston (8) and an annular groove (28) to a return connexion (27) from which a return line (31) leads to the oil sump (15) of the internal-combustion engine.

6. A chain tensioner according to Claim 5, **characterized in that** the return line (31) contains a throttle (32) and a return valve (33) arranged in a by-pass thereto.

7. A chain tensioner according to Claim 6, **characterized in that**, with a suitable arrangement and dimensions of the axial grooves (22, 24), the return bores (29, 30) as well as the throttle (32) and the return valve (33), the hydraulic piston (8) is damped during the tensioning movement thereof to a lesser extent in the direction of the chain (4) than in the opposite direction.

## Revendications

1. Tendeur de chaîne pour une chaîne qui est prévue entre un arbre à cames d' entrée et un arbre à cames de sortie d' un moteur à combustion interne, lequel tendeur agit entre un brin de charge et un brin mou de la chaîne et comporte un piston hydraulique guidé longitudinalement dans un alésage (9) d'un boîtier (10), lequel piston hydraulique est soumis à l'action d'un ressort hélicoïdal (11), prenant appui sur le boîtier (10), caractérisé en ce que le boîtier (10) comporte un patin (14) et le piston hydraulique (8) un sabot de serrage (13), qui coopèrent avec le brin mou (6) et le brin de charge et en ce que la pression hydraulique (p1) agit sur une surface annulaire extérieure (21) du piston hydraulique (8) dans l'un de ses sens de déplacement et une pression hydraulique (p2) réduite agit sur une surface intérieure (26) centrale du piston (8), dans son autre sens de déplacement, la surface annulaire (21) étant prévue entre un alésage (9) du boîtier et le piston hydraulique (8) et communiquant, de manière à guider le liquide, par au moins une fente d'étranglement (rainure de profondeur s), avec la surface intérieure (26).

2. Tendeur de chaîne selon la revendication 1, caractérisé en ce que le piston hydraulique (8) comporte une cavité (25) cylindrique, limitée par la surface intérieure (26), laquelle cavité contient le ressort hélicoïdal (11), tendu entre la surface intérieure (26) et le boîtier (10).

3. Tendeur de chaîne selon la revendication 2, caractérisé en ce que de la surface annlaire (21), une première rainure axiale (22) mène à une rainure annulaire (23) du piston hydraulique (8) et en ce que cette rainure annulaire (23) est raccordée, par une seconde rainure axiale (24), à la cavité (25).

4. Tendeur de chaîne selon la revendication 3, caractérisé en ce que la première rainure axiale (22) est décalée de 180° dans la direction périphérique, par rapport à la seconde rainure axiale (24).

5. Tendeur de chaîne selon l'une des revendications 2, 3 ou 4, caractérisé en ce que la cavité (25) communique, par des alésages de retour (29, 30) radiaux du piston hydraulique (8) et une rainure annulaire (28) avec un raccord de retour (27), dont un conduit de retour (31) mène au carter d'huile (15) du moteur à combustion interne.

6. Tendeur de chaîne selon la revendication 5, caractérisé en ce que le conduit de retour (31) contient un organe d'étranglement (32) et un clapet de non-retour (33), en dérivation à celui-ci.

7. Tendeur de chaîne selon la revendication 6. caractérisé en ce que par un dimensionnement et une disposition appropriés des rainures axiales (22, 24), des alésages de retour (29, 30) ainsi que de l'organe d'étranglement (32) et du clapet de non-retour (33), le piston hydraulique (8) est moins fortement amorti dans son déplacement de tension en direction de la chaîne (4) que dans la direction opposée.
